# EUROPÄISCHE PATENTSCHRIFT

(11) **EP 2 498 111 B1**
(45) Veröffentlichungstag und Bekanntmachung des Hinweises auf die Patenterteilung: **27.04.2016**
(21) Anmeldenummer: 12157144.2
(22) Anmeldetag: 27.02.2012
(51) Int. Cl.: G02B 6/44

(54) **Verfahren zum Herstellen einer Glasfaserspule mit einem selbsttragenden Wickel einer Glasfaserleitung und Glasfaserspule**
Method for producing an optical fibre coil with a self-supporting coil of an optical fibre and optical fibre coil
Procédé de fabrication d'une bobine de fibres de verre dotée d'un enroulement autoporteur d'une conduite en fibres de verre et bobine de fibres de verre

(30) Priorität: 07.03.2011 DE 102011013309
(43) Veröffentlichungstag der Anmeldung: 12.09.2012
(73) Patentinhaber: ATLAS ELEKTRONIK GmbH, 28309 Bremen (DE)
(72) Erfinder: Bartholomäus, Ralf, 22880 Wedel (DE); Huckfeldt, Sönke, 25336 Elmshorn (DE)
(74) Vertreter: Weidner Stern Jeschke

(56) Entgegenhaltungen:
- EP-A1- 0 546 259
- EP-A1- 2 437 091
- WO-A1-2009/036897
- DE-A1- 3 520 195
- DE-A1- 3 842 036
- DE-A1- 4 017 337
- DE-U1- 20 201 588
- US-A- 5 179 613
- US-A- 5 205 890

## Beschreibung

Die Erfindung betrifft ein Verfahren zum Herstellen einer Glasfaserspule mit einem selbsttragenden Wickel einer Glasfaserleitung nach dem Oberbegriff von Anspruch 1 sowie eine Glasfaserspule mit einem selbsttragenden Wickel einer Glasfaserleitung nach dem Oberbegriff von Anspruch 10.

WO2009/036897 A1 zeigt eine selbsttragende Glasfaserspule und ein Verfahren zu deren Herstellung, wobei die Glasfaserspule aus einem Wickel mit übereinanderliegenden Lagen von Windungen einer aus dem Wickelinneren heraus abspulbaren Glasfaserleitung besteht. Die Glasfaserleitung dient zur Übertragung von Informationen zwischen einem U-Boot und einem von dem U-Boot abgesetzten Fahrzeug, z.B. einem ziellaufenden Torpedo. Um der Glasfaserspule eine ausreichende Stabilität zu geben, damit diese selbsttragend ihre Form bewahrt, ist der Wickel der Glasfaserspule als Kreuzwicklung gewickelt, wobei Windungen einer Lage der Glasfaserleitung mit den Windungen der benachbarten Lagen der Glasfaserleitung durch ein klebendes oder haftendes Bindemittel aneinander fixiert sind.

DE 35 20 195 A1 offenbart ein Verfahren zur Herstellung eines lagenweise gewickelten Gebindes aus strangförmigem Gut, wobei die Lagen des strangförmigen Gutes ganz, punktförmig oder linienförmig direkt mittels eines Klebers verklebt sind.

DE 40 17 337 A1 beschreibt ein Verfahren zur Herstellung eines Wickelkörpers, bei dem die äußere Oberfläche des Lichtwellenleiters unmittelbar vor dem Auftreffen auf die bereits auf den Kern aufgewickelten Windungen des Wickelkörpers mittels eines Schmelzklebers verklebt werden.

US 5,179,613 A offenbart einen freitragenden Wickel aus einer Lichtleitfaser mit einer dünnen Schicht aus thermoplastischem Klebstoff, welcher einander benachbarte Windungen der Lichtleitfaser miteinander verklebt.

Zur Informationsübertragung zwischen einem U-Boot oder einer Startplattform und einem von dem U-Boot bzw. der Startplattform abgesetzten Fahrzeug, z.B. einem Torpedo oder einem Unterwasserlaufkörper, wird vor dem Absetzen des Fahrzeugs, die Glasfaserleitung in Form einer Glasfaserspule im Fahrzeug sowie in einer am U-Boot bzw. an der Startplattform verbleibenden sog. Kassette aufbewahrt. Nach dem das Fahrzeug vom U-Boot bzw. von der Startplattform abgesetzt wurde, werden bereits Informationen durch die Glasfaserleitung übertragen, während sich die Glasfaserspule von innen nach außen abspult. Die Glasfaserspule ist zum leichten und sicheren Abspulen in einer Kreuzwicklung gewickelt. Ein leichtes und sicheres Abspulen ist aufgrund der hohen Geschwindigkeiten, mit denen sich die Glasfaserspule abwickelt, zwingend notwendig, damit die Glasfaserspule beim Abwickeln nicht reißt. Zur Herstellung der Glasfaserspule wird die Glasfaserspule auf einen Wickeldorn gewickelt, der nach dem Wickelvorgang entfernt werden muss, um ein Abspulen der Glasfaserspule von innen nach außen zu ermöglichen. Die Glasfaserspule muss nach dem Entfernen des Wickeldorns selbsttragend ihre Form bewahren.

Gemäß dem Stand der Technik wird beim Wickeln der Glasfaserspule ein geiartiger Füll- bzw. Tränkstoff auf die Glasfaserleitung oder einzelne Windungen der Glasfaserspule aufgetragen, wobei der Füll- bzw. Tränkstoff gegenüber der Raumtemperatur erwärmt ist und sich durch Abkühlen verfestigt Es ist ferner bekannt, dass die fertig gewickelte Glasfaserspule mit in ihr belassenem Wickeldorn in ein Tauchbad getaucht wird, das ebenfalls aus dem gegenüber der Raumtemperatur erwärmten und dadurch verflüssigten Füll- bzw. Tränkstoff besteht. In beiden Fällen wird durch Abkühlen der Glasfaserspule erreicht, dass der Füll- bzw. Tränkstoff in einen gelartigen Zustand übergeht und somit die einzelnen Windungen bzw. die Lagen der Glasfaserspule miteinander verkleben und dadurch die Glasfaserspule selbsttragend ihre Form bewahrt.

In EP 2 437 091 A1 wird beispielsweise eine derartige Glasfaserspule sowie ein Verfahren zur Herstellung einer derartigen Glasfaserspule mit einem selbsttragenden Wickel einer Glasfaserleitung gezeigt Zur Herstellung des Wickels wird die Glasfaserleitung in einer besonderen Art einer Kreuzwicklung in mehreren übereinanderliegenden Lagen der Glasfaserleitung gewickelt und die Lagen dann mit einem Füll- bzw Tränkstoff verklebt.

Ferner zeigt auch WO 2009/036897 A1 ein Verfahren zur Herstellung eines selbsttragenden Wickels einer Glasfaserspule sowie die Glasfaserspule selbst. Die Windungen der als Wickel in Kreuzwickelausführung aufgewickelten Glasfaser werden dazu mittels eines klebenden Bindemittels aneinander fixiert.

Zudem zeigt US 5 205 890 A ein Verfahren zur Herstellung eines stabilen Wickels einer Glasfaserleitung. Hierzu wird vor dem Wickeln ein Klebstoff auf die Glasfaser aufgebracht und ausgehärtet. Dann wird die Glasfaserleitung mit dem ausgehärteten Klebstoff, der im ausgehärteten Zustand eine glatte Oberfläche der Glasfaserleitung aufweist, in Parallelwicklung gewickelt. Nach dem Wickeln wird die fertig gewickelte Glasfaserleitung für eine vorbestimmte Zeit auf eine vorbestimmte Temperatur erhitzt, um den Kleber, der bislang die glatte Oberfläche gebildet hat, zu aktivieren, so dass sich benachbarte Windungen des Wickels miteinander verkleben.

Hierbei ergibt sich das Problem, dass der Füll- bzw. Tränkstoff während des Abkühlvorgangs verlaufen kann und dadurch zwischen einzelnen Lagen bzw. einzelnen Windungen der Glasfaserleitung eine höhere bzw. eine geringere als eine für ein sicheres Abspulen gewünschte Haft- bzw. Klebekraft entsteht. Durch eine zu hohe Klebkraft kleben einzelne Lagen bzw. einzelne Windungen der Glasfaserleitung derartig fest aneinander, dass beim schnellen Abspulen der Glasfaserleitung eine sich zu einem bestimmten Zeitpunkt abspulende Windung bereits eine Windung oder mehrere Windungen aus einer Lage der Glasfaserleitungen mit sich reißt, die erst zu einem späteren Zeitpunkt hätte abgewickelt werden dürfen.

Durch Mitreißen der Windungen kann ein Verknoten und/oder ein Verknicken der Glasfaserleitung entstehen, wodurch sich die Glasfaserleitung z B in der Kassette im U-Boot bzw. in der Startplattform festsetzt und bei gleichzeitiger Vergrößerung der Entfernung zwischen dem U-Boot bzw. der Startplattform und dem vom U-Boot bzw. von der Startplattform abgesetzten Fahrzeug, z.B. dem Torpedo oder dem Unterwasserlaufkörper, einer derartigen Spannung ausgesetzt wird, dass die Glasfaserleitung reißt.

Der Erfindung liegt daher die Aufgabe zugrunde, ein Verfahren zur Herstellung einer Glasfaserspule sowie eine Glasfaserspule aufzuzeigen, bei der beim Abspulen einer Windung ein Mitreißen einer weiteren mit der Windung zu stark verhaftenden Windung verhindert wird.

Die Erfindung löst dieses Problem durch die Merkmale eines Verfahrens zum Herstellen einer Glasfaserspule mit einem selbsttragenden Wickel einer Glasfaserleitung gemäß Anspruch 1 sowie die Merkmale einer Glasfaserspule mit einem selbsttragenden Wickel einer Glasfaserleitung gemäß Anspruch 10.

Das erfindungsgemäße Verfahren zur Herstellung der Glasfaserspule sowie die Glasfaserspule werden dazu erfindungsgemäß derart ausgelegt, dass ein sicheres und leichtes Abspulen der Glasfaserspule gewährleistet wird, indem die Lagen der Glasfaserleitung statisch lagefixiert werden bzw. sind.

Dazu betrifft die Erfindung ein Verfahren zum Herstellen einer Glasfaserspule mit einem selbsttragenden Wickel einer Glasfaserleitung. Bei der Herstellung wird der Wickel aus der Glasfaserleitung als eine Kreuzwicklung aufgewickelt, so dass der Wickel aus mehreren übereinanderliegenden Lagen der Glasfaserleitung gebildet wird. Durch das Wickeln als Kreuzwicklung treten Berührungsflächen zwischen benachbarten Lagen der übereinanderliegenden Lagen der Glasfaserleitung auf.

Die Glasfaserleitung weist eine Oberfläche auf, auf die Erhebungen aufgebracht bzw. auf der Erhebungen erzeugt werden. Erhebungen bestehen hierbei z.B. aus einem Material, das auf die Oberfläche aufgebracht wird. Das Material erzeugt dann durch partielle Anhäufung des Materials partiell die Erhebungen, die jeweils an einer Position weitestgehend, zumindest durch die gewöhnlich vorherrschenden Kräfte innerhalb einer Glasfaserspule, unverrückbar auf der Oberfläche der Glasfaserspule befestigt sind. Durch das Aufbringen bzw. das Erzeugen der Erhebungen entstehen zwischen den Erhebungen Zwischenräume. Zwischenräume sind hier die Bereiche oder Positionen auf der Oberfläche, in denen keine Erhebungen auf die Oberfläche aufgebracht wurden. Die Erhebungen werden dabei derart auf der Oberfläche der Glasfaserleitung verteilt, dass im Bereich jeweils einer der Berührungsflächen mindestens eine der Erhebungen einer der benachbarten Lagen der jeweiligen Berührungsfläche in mindestens einen der Zwischenräume der anderen der benachbarten Lagen derselben Berührungsfläche greift. Die Oberfläche der Glasfaserleitung wird also derart durch die partiell verteilten Erhebungen aufgeraut bzw. der Reibungskoeffizient der Oberfläche derart erhöht, so dass sich in den Berührungsflächen die raue Oberfläche der benachbarten Lagen ineinander verzahnt.

In einer Berührungsfläche berühren sich also genau zwei benachbarte Lagen der Glasfaserleitung. Im Bereich der Berührungsflächen der beiden sich berührenden Glasfaserleitungen weist die Oberfläche der Glasfaserleitung Erhebungen und Zwischenräume zwischen den Erhebungen auf. Die Oberfläche ist also rau bzw. weist einen vergleichsweise hohen Reibungskoeffizienten im Vergleich zur Oberfläche ohne Erhebungen auf. In diesem Bereich der jeweiligen Berührungsfläche greifen die Erhebungen der einen der beiden Lagen in die Zwischenräume der Erhebungen der anderen der beiden Lagen. Die Lagen verzahnen sich also ineinander. Hierbei ist es möglich, dass eine Erhebung oder mehrere Erhebungen auf der Oberfläche der einen der benachbarten Lagen in der Berührungsfläche in einen oder mehrere Zwischenräume zwischen den Erhebungen auf der Oberfläche der anderen der benachbarten Lagen in derselben Berührungsfläche greifen.

Ferner betrifft die Erfindung eine Glasfaserspule mit einem selbsttragenden Wickel einer Glasfaserleitung. Der Wickel ist als eine Kreuzwicklung ausgebildet, so dass der Wickel mehrere übereinanderliegende Lagen der Glasfaserleitung aufweist. Die Glasfaserspule weist zwischen benachbarten Lagen der übereinanderliegenden Lagen Berührungsflächen auf. Eine Berührungsfläche wird also durch den Bereich definiert, in dem sich zwei benachbarte Lagen der Glasfaserleitung bzw. zwei benachbarte Windungen zweier benachbarter Lagen der Glasfaserleitung berühren.

Die Glasfaserleitung der Glasfaserspule weist eine Oberfläche auf, wobei die Oberfläche Erhebungen und Zwischenräume zwischen den Erhebungen aufweist. Die Oberfläche der Glasfaserspule ist also rau bzw. weist im Vergleich zu einer herkömmlichen Oberfläche einer Glasfaserleitung einen hohen Reibungskoeffizienten auf. Dabei sind die Erhebungen derart verteilt, dass im Bereich jeweils einer der Berührungsflächen mindestens eine der Erhebungen einer der benachbarten Lagen der jeweiligen Berührungsfläche in mindestens einen der Zwischenräume der anderen der benachbarten Lagen derselben Berührungsfläche greift. Die Rauhigkeit ist also derart ausgestaltet, so dass benachbarte Lagen der Oberfläche der Glasfaserleitung sich ineinander verzahnen bzw. sich vermaschen.

Vorteil des Verfahrens zum Herstellen der Glasfaserspule, bei dem Erhebungen auf die Oberfläche der Glasfaserleitung erzeugt bzw. aufgebracht werden, sowie der Glasfaserspule mit einer Glasfaserleitung, die Erhebungen auf ihrer Oberfläche aufweist, ist, dass die Glasfaserspule selbsttragend ihre Form bewahrt, auch wenn kein Wickeldorn in ihr belassen wird und kein Klebstoff oder Füll- bzw. Tränkstoff zur Fixierung der einzelnen Windungen bzw. Lagen der Glasfaserleitung aneinander benötigt wird.

Beim Abspulen wird keine Windung mitgerissen, die zu einem bestimmten Zeitpunkt noch nicht abgespult werden darf, da diese z.B. zu stark mit einer sich zu einem Zeitpunkt abspulenden Windung verklebt ist. Hierdurch wird ein Abreißen der Glasfaserleitung beim Abspulen vermieden und ein sicheres und leichtes Abspulen der Glasfaserleitung ermöglicht.

Durch das Ineinandergreifen der Erhebungen und Zwischenräume der einzelnen Windungen benachbarter Lagen der Glasfaserleitung wird bereits beim Wickeln verhindert, dass die für eine Kreuzwicklung definierten bestimmten Positionen der Windungen verrutschen. Auch nach Fertigstellen der Glasfaserspule bzw. bei der Glasfaserspule selbst können die einzelnen Windungen bzw. Lagen der Glasfaserleitung nicht mehr verrutschen bzw. sich verschieben.

Nach einer weiteren vorteilhaften Weiterbildung des Verfahrens zum Herstellen einer Glasfaserspule werden die Erhebungen mit einem Material gebildet, das insbesondere durch Adhäsion, an der Oberfläche der Glasfaserleitung angehaftet wird. D.h., dass das Material direkt an der Oberfläche der Glasfaserleitung anhaftet und die Erhebungen bildet. Ein geeignetes Material ist z.B. eine Dispersion wie z.B. eine Suspension oder Emulsion.

Ebenfalls sind die Erhebungen gemäß einer Weiterbildung der erfindungsgemäßen Glasfaserspule mit einem Material auf der Oberfläche der Glasfaserleitung gebildet, das an der Oberfläche der Glasfaserleitung, insbesondere durch Adhäsion, angehaftet ist.

Vorteil eines, z.B. durch Adhäsion, direkt an der Oberfläche der Glasfaserleitung haftenden Materials, aus dem die Erhebungen gebildet werden bzw. gebildet sind, ist, dass kein zusätzlicher Klebstoff bzw. kein zusätzliches Klebemittel bei der Herstellung auf die Oberfläche der Glasfaserleitung aufgebracht werden muss, um die Erhebungen zu bilden.

Gemäß einer weiteren vorteilhaften Weiterbildung des Verfahrens zum Herstellen der Glasfaserspule werden die Erhebungen auf der Oberfläche der Glasfaserleitung erzeugt bzw. aufgebracht, indem eine Dispersion mit flüssigen und festen Anteilen auf die Oberfläche der Glasfaserleitung aufgebracht bzw. auf dieser verteilt wird und der flüssige Anteil der Dispersion ausgetrocknet bzw. verdampft wird. Nach dem Austrocknen bzw. Verdampfen des flüssigen Anteils bleibt lediglich der feste Anteil der Dispersion auf der Oberfläche der Glasfaserleitung zurück und bildet dort die Erhebungen. Eine Dispersion kann z.B. eine Suspension mit festem und flüssigem Anteil oder eine Emulsion mit einem flüssigen und einem Gemisch aus einem festen und flüssigen Anteil sein.

Vorteil, die Erhebungen durch eine Dispersion mit flüssigem Anteil auf die Oberfläche der Glasfaserleitung aufzubringen, ist, dass Dispersionen mit einem flüssigen Anteil einfach vor dem Wickeln auf die Oberfläche der Glasfaserleitung aufgebracht werden können.

Gemäß einer weiteren vorteilhaften Weiterbildung des erfindungsgemäßen Verfahrens zum Herstellen einer Glasfaserspule wird die Dispersion auf die Oberfläche der Glasfaserleitung aufgebracht, indem die Glasfaserleitung ein mit der Dispersion getränktes erstes Mittel streift. Die Glasfaserleitung wird also z.B. durch ein mit der Dispersion getränktes erstes Mittel gezogen bzw. durchläuft einen Schlitz oder ein Loch im ersten Mittel, z.B. in einem Schwamm, der mit der Dispersion getränkt ist, wobei die Dispersion beim Durchlaufen des getränkten Mittels, also des getränkten Schwamms, an der Glasfaserleitung zumindest teilweise leicht anhaftet. Danach ist es weiter vorteilhaft, wenn die Glasfaserleitung ein ungetränktes zweites Mittel, z.B. einen zweiten Schwamm, streift oder z.B. durch einen Schlitz oder Loch in diesem zweiten Mittel verläuft, um zuviel aufgetragene Dispersion abzustreifen.

Ferner ist es möglich die Dispersion auf die Oberfläche der Glasfaserleitung aufzubringen, indem die Glasfaserleitung und die Dispersion mit entgegensetzter Polarität elektrisch geladen werden. Wird die Dispersion zerstäubt und die zerstäubte Dispersion in den Bereich der Glasfaserleitung gebracht, so zieht die Glasfaserleitung die Dispersion an, die sich dann auf der Oberfläche der Glasfaserleitung niederlegt.

Vorteil die Dispersion auf die Oberfläche der Glasfaserleitung aufzubringen, indem die Glasfaserleitung ein getränktes erstes Mittel streift und/oder die Glasfaserleitung sowie die Dispersion sich durch elektrische Ladung anziehen, ist dass eine gleichmäßige Verteilung der Dispersion auf der Glasfaserleitung erreicht wird. Zudem ist es möglich, durch Regulierung des Tränkungsgrades des getränkten ersten Mittels, also durch Regulierung der Zufuhrmenge der Dispersion zur Tränkung des ersten Mittels im Verhältnis zur Geschwindigkeit der streifenden bzw. durchlaufenden Glasfaserleitung, bzw. durch Regulierung der Höhe der elektrischen Ladung, die Menge der Dispersion, die an der Glasfaserleitung aufgebracht werden soll, zu regulieren. Damit kann eine im Wesentlichen genau festgelegte Verteilung der Erhebungen auf der Oberfläche der Glasfaserleitung erreicht werden.

Nach einer weiteren vorteilhaften Weiterbildung des erfindungsgemäßen Verfahrens wird die äußere Phase der Dispersion ausgetrocknet bzw. verdampft, indem die Glasfaserleitung ein oder mehrfach durch mindestens ein Thermoelement gelenkt wird, also das Thermoelement von der Glasfaserleitung durchlaufen wird. Nach dem also die Dispersion auf die Oberfläche der Glasfaserleitung aufgetragen bzw. aufgebracht worden ist, wird die Glasfaserleitung z.B. über Umlenkrollen durch ein oder mehrere Thermoelemente, z.B. Heizstrahler oder andere wärmeabstrahlende Vorrichtungen, geführt. Hierbei ist es möglich die Glasfaserleitung ein- oder mehrfach durch dasselbe Thermoelement oder mehrere Thermoelemente zu führen bzw. die Thermoelemente von der Glasfaserleitung durchlaufen zu lassen. Die Glasfaserleitung durchläuft die Thermoelemente bzw. das Thermoelement solange, bis der flüssige Anteil der Dispersion vollständig verdampft ist und lediglich der feste Anteil als Erhebungen auf der Oberfläche der Glasfaserleitung zurück bleibt.

Vorteil des Verdampfens bzw. des Austrocknens des flüssigen Anteils der Dispersion mit Thermoelementen ist, dass ein schnelles Trocknen gewährleistet wird, um im nächsten Schritt die Glasfaserleitung mit auf der Oberfläche zurückbleibenden Erhebungen zu einer Glasfaserspule wickeln zu können.

Gemäß einer weiteren vorteilhaften Weiterbildung des Verfahrens zum Herstellen einer Glasfaserspule wird die Dispersion auf Wasserbasis gebildet. Die Dispersion entspricht also einem Stoff bzw. einem Gemisch, deren Hauptbestandteil Wasser ist.

Vorteil einer auf Wasserbasis gebildeten Dispersion ist, dass diese nicht die Oberfläche der Glasfaserleitung bzw. die Glasfaserleitung selbst angreift, wie es z.B. der Fall bei säurehaltigen Dispersionen wäre. Bei einem Angriff der Oberfläche, also einem Zerstören der Struktur der Oberfläche bzw. der Glasfaserleitung selbst, kann dies zu Fehlern bei der Reflektion der in der Glasfaserleitung übertragenden Lichtimpulse und damit zu Fehlern bei der Informationsübertragung führen.

Gemäß einer weiteren vorteilhaften Weiterbildung des Verfahrens zum Herstellen der Glasfaserleitung wird der feste Anteil der Dispersion auf Kunststoffbasis gebildet. Der feste Anteil der Dispersion, also der Anteil der Dispersion, der nach Verdampfen des flüssigen Anteils auf der Oberfläche der Glasfaserleitung als Erhebungen zurück bleibt, wird auf Kunststoffbasis, z.B. auch durch Hinzufügen von Additiven, gebildet.

Durch Bilden des festen Anteils der Dispersion auf Kunststoffbasis ergibt sich der Vorteil, dass die Eigenschaften der Erhebungen, z.B. Steifigkeit und die Form der Erhebungen, gut vorbestimmt werden können. Kunststoffe, vor allem durch Hinzufügen von Additiven, haben die Eigenschaft, dass ihre Formgebung sowie ihre weiteren Eigenschaften gut an gegebene Anforderungen anpassbar sind.

Gemäß einer weiteren vorteilhaften Ausbildung des erfindungsgemäßen Verfahrens zum Herstellen der Glasfaserspule wird die Glasfaserleitung beim Wickeln einer Zugkraft ausgesetzt, die Abhängig von der Art der Dispersion und der aktuell zu wickelnden Lage ist. Die Zugkraft wird dazu beginnend von der ersten oder inneren Lage über jede weitere darüberliegende oder außenseitig liegende Lage der Glasfaserleitung reduziert und während des Wickelns einer Lage konstant gehalten. Ferner ist die Zugkraft abhängig vom Material und der Verteilung der Dispersion, wobei hierbei z.B. die Verteilung der Erhebung, die Steifigkeit und die Form des festen Anteils der Dispersion, also auch der Erhebungen auf der Oberfläche der Glasfaserleitung, beachtet werden müssen. Die Zugkraft ist also derart zu wählen, dass in den Berührungsflächen eine ausreichende Anzahl von Erhebungen einer Lage der Glasfaserleitung in die Zwischenräume der anderen Lage greifen bzw. sich dort verhaken.

Gemäß einer weiteren vorteilhaften Weiterbildung der erfindungsgemäßen Glasfaserspule weist auch diese in jeder Lage eine Spannung der Windungen der Glasfaser auf, die abhängig vom Material und der Verteilung der Dispersion sowie der jeweiligen Lage der Glasfaserleitung ist.

Vorteil dass die Glasfaserleitung beim Wickeln einer Zugkraft ausgesetzt wird bzw. dass die Lagen der Windungen einer Glasfaserleitung durch diese Zugkraft eine Spannung aufweisen, die abhängig vom Material und der Verteilung der Dispersion sowie von der zu wickelnden bzw. der gewickelten Lage ist, ist dass wegen des steigenden Durchmessers der Glasfaserspule vom Inneren zum Äußeren ein höherer Druck der äußeren Lagen auf die inneren Lagen ausgeübt wird, wodurch die Glasfaserspule nach Entfernen des Wickeldorns in sich zusammenfallen würde, der jedoch durch Verringern der Zugkraft weitestgehend minimiert wird. Ferner ist durch Beachtung des Materials und der Verteilung der Dispersion bei der Wahl der Zugkraft gewährleistet, dass aufgrund der Eigenschaften der Dispersion also auch der Erhebungen, ein korrektes Ineinandergreifen der Erhebungen und Zwischenräume innerhalb der Berührungsflächen gewährleistet wird, sodass die Glasfaserspule nach dem Entfernen des Wickeldorns selbsttragend ihre Form bewahrt.

Gemäß einer weiteren vorteilhaften Ausbildung des Verfahrens zum Herstellen einer Glasfaserspule wird jede Lage durch Windungen gewickelt und die Glasfaserleitung beim Wickeln innerhalb jeder der Windungen in sich selbst gedreht.

Ebenfalls zeigt gemäß einer weiteren vorteilhaften Weiterbildung der Glasfaserspule die Glasfaserspule eine Glasfaserleitung auf, die innerhalb jeder Windung in sich selbst gedreht ist.

Eine Windung bedeutet in diesem Zusammenhang dass die Glasfaserleitung um einen gedachten Zylindermantel gewickelt ist, wobei der Start- und Endpunkt der Windung auf einer Geraden parallel zur Spulenlängsachse auf dem Zylindermantel liegen. Innerhalb jeder Windung der Glasfaserleitung ist die Glasfaserleitung in sich selber gedreht. D.h. vom Startpunkt bis zum Endpunkt jeder Windung der Glasfaserleitung wird die Glasfaserleitung um eine Längsachse durch den Glasfaserleitungsmittelpunkt um 360 Grad gedreht.

Die Richtung, in der die Glasfaserleitung in sich selbst gedreht, also verdrallt, ist, wird von einer Blickrichtung vom später abzuspulenden Ende der Glasfaserleitung aus entlang ihrer Längsachse als Drehung der Glasfaserleitung um ihre Längsachse aus dieser Blickrichtung definiert. Dabei ist die Richtung, in welche die Glasfaserleitung in sich selbst gedreht (verdrallt) ist, abhängig von der Abziehrichtung d.h. der bzgl. der Glasfaserspule axialen Richtung, in welche die Glasfaserspule abgespult werden soll. Ferner ist die Richtung in welche die Glasfaserleitung in sich selbst gedreht ist, davon abhängig, ob die Glasfaserleitung für ein Abspulen in rechts- oder linksdrehender Richtung vorgesehen ist, wobei dieses Abspulen entgegen der Abziehrichtung betrachtet wird. Die Glasfaserleitung ist also in der gleichen Richtung in sich selbst gedreht (verdrallt), in der sich die Glasfaserleitung - entgegen der Abziehrichtung betrachtet - abspulen wird.

Vorteilhaft an dieser Vorverdrallung bzw. Drehung der Glasfaserleitung in sich selbst ist, dass dadurch beim Abwickeln der Glasfaserleitung keine Schlaufen entstehen und die Glasfaserleitung nach dem Abwickeln bzw. Abziehen drallfrei ist, wodurch anderenfalls ein Abreißen der Glasfaserleitung möglich wäre.

Weitere vorteilhafte Ausführungsformen ergeben sich aus den Unteransprüchen sowie aus den anhand beigefügten Zeichnung näher erläuterten Ausführungsbeispielen. In der Zeichnung zeigen:
- Fig. 1: zeigt den Ablauf eines Verfahrens zum Herstellen einer Glasfaserspule gemäß einem Ausführungsbeispiel der Erfindung;
- Fig. 2: eine Vorrichtung zur Herstellung eines Ausführungsbeispiels der erfindungsgemäßen Glasfaserspule;
- Fig. 3: ein erstes Mittel, das mit einer Dispersion getränkt und von der Glasfaserleitung durchlaufen bzw. gestreift wird, sowie ein zweites Mittel, das überschüssige Dispersion von der Oberfläche der Glasfaserleitung abstreift;
- Fig. 4: eine Glasfaserleitung mit auf der Oberfläche der Glasfaserleitung erzeugten Erhebungen und dadurch entstandenen Zwischenräumen;
- Fig. 5: den Querschnitt der Glasfaserleitung aus Fig. 4;
- Fig. 6: eine Glasfaserspule mit einem selbsttragenden Wickel einer Glasfaserleitung und
- Fig. 7: einen Ausschnitt einer Schnittebene eines Ausführungsbeispiels der Glasfaserspule.

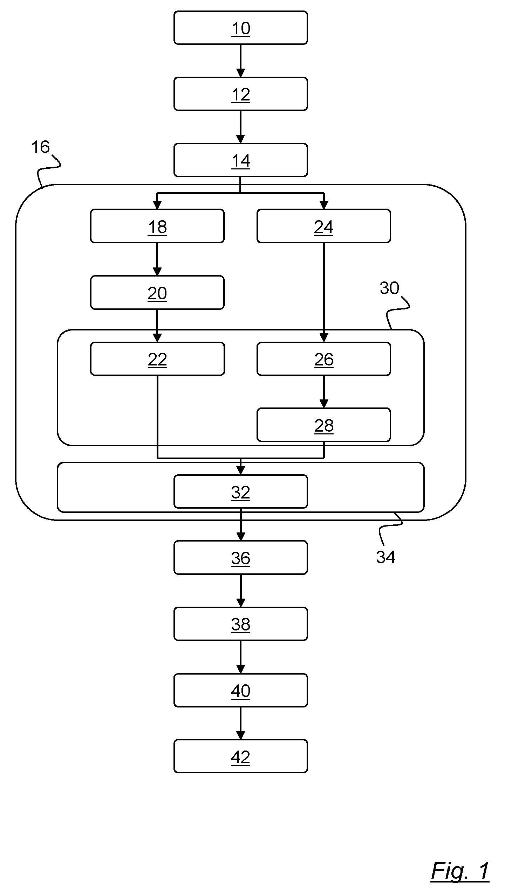

Fig. 1 zeigt den Ablauf eines Verfahrens zum Herstellen einer Glasfaserspule mit einem selbsttragenden Wickel einer Glasfaserleitung gemäß einem Ausführungsbeispiel des erfindungsgemäßen Verfahrens. Hierbei wird zunächst eine Dispersion, z.B. eine Suspension, gebildet 10, indem ein Gemisch aus einem festen Anteil und einem flüssigen Anteil gebildet 10 wird. Eine Dispersion bezeichnet hier ein Gemisch eines festen und eines flüssigen Anteils, wobei der feste Anteil, nämlich die innere Phase, im flüssigen Anteil, nämlich der äußeren Phase, verteilt ist. Die innere Phase wird auch als disperse Phase und die äußere Phase als kontinuierliche Phase benannt. Die innere Phase wird vorzugsweise auf Kunststoffbasis gebildet und die äußere Phase wird vorzugsweise auf Wasserbasis gebildet. Das Bilden 10 der Dispersion wird hier zu Beginn des Verfahrens zur Herstellung einer Glasfaserspule beschrieben, kann jedoch auch zu einem späteren Zeitpunkt im folgenden Ablauf jedoch vor Verwendung der Dispersion geschehen.

Nach dem Bilden 10 der Dispersion wird die Glasfaserleitung in sich selbst gedreht 12. Dazu wird eine Vorratsspule mit der Glasfaserleitung quer zu einer Achse durch die Vorratsspule gedreht. Während des Drehens 12 der Glasfaserleitung in sich selbst wird die Glasfaserleitung von der Vorratsspule abgewickelt 14. Im Folgenden werden Erhebungen auf der Glasfaserleitung erzeugt 16. Dazu kann auf zweierlei Wegen verfahren werden. Im ersten Weg wird die Dispersion und die Glasfaserleitung mit entgegensetzter Polarisation geladen 18. Daraufhin wird die Dispersion zerstäubt 20 und in die Nähe der Glasfaserleitung gebracht 22. Im zweiten Weg wird ein erstes Mittel, wie z.B. ein Schwamm, mit der Dispersion getränkt 24 und das erste Mittel danach von der Glasfaserleitung gestreift 26. Daraufhin streift die Glasfaserleitung ein zweites Mittel, das ebenfalls z.B. ein Schwamm ist, der nicht mit der Dispersion getränkt ist. Beim Streifen des zweiten Mittels wird überschüssige Dispersion abgestreift 28. Das in die Nähebringen 22 der Dispersion und der Glasfaserleitung sowie das Streifen 26 der Glasfaserleitung mit einem ersten Mittel sowie das Abstreifen 28 mit einem zweiten Mittel dient dem Verteilen 30 der Dispersion auf der Glasfaserleitung. Nach dem Verteilen 30 der Dispersion auf der Glasfaserleitung wird die Glasfaserleitung durch Thermoelemente gelenkt 32, wobei der flüssige Anteil der Dispersion ausgetrocknet bzw. verdampft 34 wird.

Nach dem Erzeugen 16 der Erhebungen auf der Oberfläche der Glasfaserleitung entstehen 36 Zwischenräume zwischen den Erhebungen. Daraufhin wird die Glasfaserleitung einer Zugkraft ausgesetzt 38 und der Wickel als Kreuzwicklung gewickelt 40.

Durch das Erzeugen 16 der Erhebungen sowie durch das Entstehen 36 der Zwischenräume und das Wickeln 40 als Kreuzwicklung entstehen übereinanderliegende Lagen der Glasfaserleitung, wobei die Erhebungen derart erzeugt 16 werden, so dass die Erhebungen und Zwischenräume benachbarter Lagen in Berührungspunkten ineinandergreifen 42.

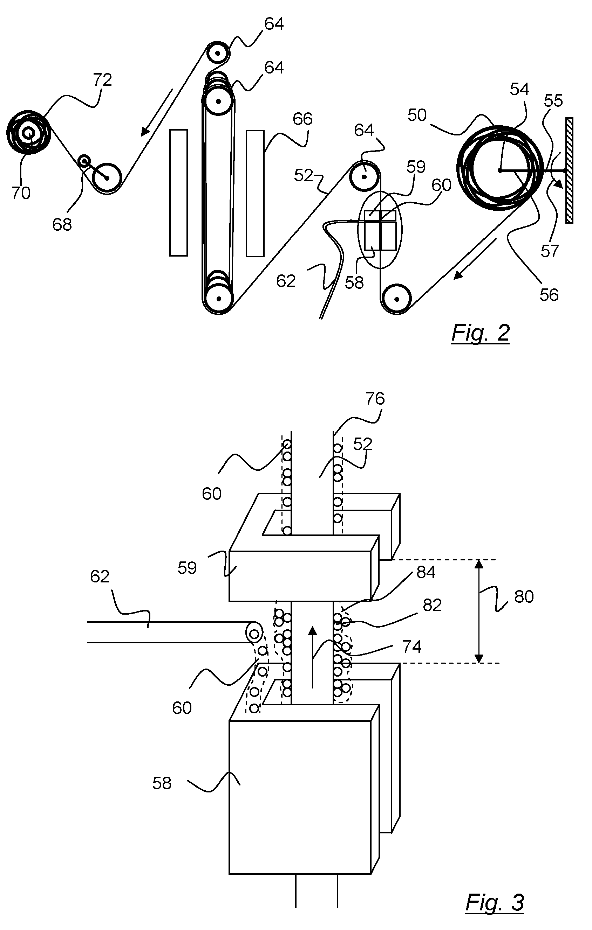

Fig. 2 zeigt eine Vorrichtung zur Ausführung eines Ausführungsbeispiels des erfindungsgemäßen Verfahrens zur Herstellung eines Ausführungsbeispiels der erfindungsgemäßen Glasfaserspule. Dazu ist eine Vorratsspule 50 mit einer Glasfaserleitung 52 mit einer Achse 54 durch den Mittelpunkt der Vorratsspule 50 derart an einer Aufhängung 56 der Vorratsspule 50 mit einer zweiten Achse 55 befestigt, so dass die Aufhängung 56 der Vorratsspule 50 um die zweite Achse 55 in Pfeilrichtung 57 und damit die Vorratsspule 50 quer zur Achse 54 durch den Mittelpunkt der Vorratsspule 50 gedreht werden kann. Durch Drehen der Vorratsspule 50 um die Achse 54 durch den Mittelpunkt der Vorratsspule 50 wird die Glasfaserleitung 52 abgewickelt 14. Durch das Drehen der Vorratsspule 50 um die zweite Achse 55 und damit quer zur Achse 54 durch den Mittelpunkt der Vorratsspule 50 wird die Glasfaserleitung 52 in sich selbst gedreht 12. Die Glasfaserleitung 52 durchläuft bzw. streift 26 ein erstes Mittel 58, das mit einer Dispersion 60 getränkt 24 wird. Zur Tränkung 24 des ersten Mittels 58, das z.B. ein Schwamm ist, wird die Dispersion 60 über eine Zuleitung 62 dem ersten Mittel 58 zugeführt. Die Glasfaserleitung 52 verläuft nach Streifen 26 des ersten Mittels 58 durch ein nichtgetränktes zweites Mittel 59 bzw. streift dieses, das ebenfalls z.B. ein Schwamm ist, an dem zu viel aufgetragene Dispersion 60 abgestreift 28 wird. Daraufhin wird die Glasfaserleitung 52 durch mindestens ein oder mehrere Thermoelemente oder Thermoheizelemente 66 gelenkt 32, um den flüssigen Anteil der Dispersion 60 zu verdampfen 34. Über Umlenkrollen 64 wird die Glasfaserleitung 52 zu einer Spannrolle 68, die die Spannung der Glasfaserleitung erhöhen oder absenken kann und somit die Glasfaserleitung einer definierten Zugkraft ausgesetzt 38, auf einen Wickeldorn 70 gewickelt. Hierbei wird die Glasfaserleitung 52 auf den Wickeldorn 70 als Kreuzwicklung zu einer Glasfaserspule 72 gewickelt 40. Hierzu wird die Spannrolle 68 auf einer parallelen Linie zur Achse des Wickeldorns 70 hin und her bewegt.

Fig. 3 zeigt das erste Mittel 58, das über die Zuleitung 62 mit der Dispersion 60 getränkt 24 wird. Hierbei durchläuft die Glasfaserleitung 52 das erste Mittel 58 in Pfeilrichtung 73 von unten nach oben bzw. streift 26 das erste Mittel 58. Die Glasfaserleitung 52 streift 26 das erste Mittel 58, wobei die Dispersion 60 sich auf der Oberfläche 76 der Glasfaserleitung 52 verteilt 30. Weiter durchläuft die Glasfaserleitung 52 das nicht mit Dispersion 60 getränkte zweite Mittel 59, wobei überschüssige Dispersion 60 im zweiten Mittel 59 verbleibt, also von diesen abgestreift 28 wird, und sich eine gleichmäßige Verteilung der Dispersion 60 auf der Oberfläche 76 der Glasfaserleitung 52 ergibt. Das erste Mittel 58 sowie das zweite Mittel 59 sind durch einen Zwischenraum 80, in dem die Dispersion 60 über die Zuleitung 62 zugeführt wird getrennt. Nach Durchlaufen des zweiten Mittels 59 verbleibt ein fester Anteil 82 der Dispersion 60 sowie ein flüssiger Anteil 84 der Dispersion 60 auf der Oberfläche 76 der Glasfaserleitung 52. Anstatt eines ersten Mittels 58 und eines vom ersten Mittel 58 getrennten zweiten Mittels 59 ist auch ein einzelnes Mittel, z.B. ein Schwamm, möglich, der lediglich eine Öffnung zum Zuführen der Dispersion 60 aufweist. Ferner ist zur besseren Darstellung in Fig. 3 ein großer seitlich durch das erste Mittel 58 und das zweite Mittel 59 verlaufender Schlitz, durch das die Glasfaserleitung 52 in das erste Mittel 58 und das zweite Mittel 59 "eingefädelt" wird dargestellt. Dieser Schlitz ist herkömmlicherweise sehr viel schmaler, so dass das erste Mittel 58 und das zweite Mittel 59 die Glasfaserleitung 52 im Wesentlichen vollständig umschließen.

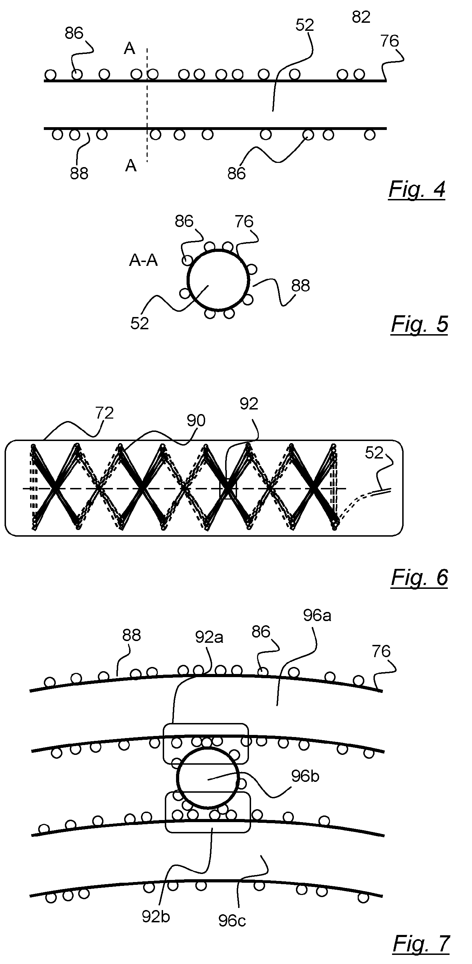

Fig. 4 zeigt die Glasfaserleitung 52, nach dem sie die Thermoelemente bzw. die Thermoheizelemente 66 durchlaufen 32 hat und der flüssige Anteil 84 der Dispersion 60 verdampft 34 ist. Auf der Oberfläche 76 der Glasfaserleitung 52 bleibt lediglich der feste Anteil 82 der Dispersion 60 zurück. Hierdurch werden Erhebungen 86 erzeugt 16 und es entstehen 36 Zwischenräume 88 zwischen den Erhebungen 86. Die Erhebungen 86 bestehen aus einem Material, das durch Adhäsion an der Oberfläche 76 der Glasfaserleitung 52 anhaftet.

Fig. 5 zeigt einen Querschnitt A-A der Glasfaserleitung 52 mit erzeugten 16 Erhebungen 86 sowie entstandenen 36 Zwischenräumen 88 der Darstellung der Glasfaserleitung 52 aus Fig. 4.

Fig. 6 zeigt eine Glasfaserspule 72 mit einem selbsttragenden Wickel 90 einer Glasfaserleitung 52. Hierbei entstehen Berührungsflächen 92 der übereinanderliegenden Lagen der Glasfaserleitung.

Fig. 7 zeigt übereinanderliegende Lagen 96a bis 96c der Glasfaserleitung 52. Jede der Lagen 96a bis 96c der Glasfaserleitung 52 weist Erhebungen 86 sowie Zwischenräume 88 zwischen den Erhebungen 86 auf. Durch das Wickeln 40 als Kreuzwicklung entstehen Berührungsflächen 92a, 92b der benachbarten Lagen 96a, 96b sowie 96b, 96c. Innerhalb der Berührungsflächen 92a, 92b greifen 42 die Erhebungen 88 auf der Oberfläche 76 der Glasfaserleitung 52 in die Zwischenräume 88 der jeweils benachbarten Lage 96a bis 96c.

In der oberen Berührungsfläche 92a ist etwa eine Erhebung 86 der Lage 96b dargestellt, die genau in einen Zwischenraum 88 zwischen zwei Erhebungen 86 der Lage 96a der Glasfaserleitung 52 greift. Es wäre auch möglich, dass zwei oder mehr Erhebungen 86 in einen Zwischenraum 88 einer benachbarten Lage 96a bis 96c der Glasfaserleitung greifen 42. Ferner ist es möglich, dass Erhebungen 86 nicht vollständig in die Zwischenräume 88 einer benachbarten Lage 96a bis 96c greifen 42, sondern nur ein Teil der Erhebung 86 bzw. der Erhebungen 86 in einen Zwischenraum 88 greift 42.

Gemäß einem weiteren Ausführungsbeispiel der erfindungsgemäßen Glasfaserspule 72 dient diese der Übertragung von Daten und Informationen zwischen einem U-Boot und einem von dem U-Boot abgesetzten Fahrzeug, z.B. einem ziellaufenden Torpedo.

Alle in der vorgenannten Figurenbeschreibung, in den Ansprüchen und der Beschreibungseinleitung genannten Merkmale sind sowohl einzeln als auch in beliebiger Kombination miteinander einsetzbar. Die Offenbarung der Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Herstellen einer Glasfaserspule (72) mit einem selbsttragenden Wickel (90) einer Glasfaserleitung (52), wobei der Wickel (90) als eine Kreuzwicklung aufgewickelt (40) wird, sodass der Wickel (90) mit mehreren übereinanderliegenden Lagen (96a bis 96c) der Glasfaserleitung (52) gebildet wird, und die Glasfaserleitung eine Oberfläche (74) und die Glasfaserspule (72) jeweils zwischen benachbarten Lagen (96a bis 96c) der übereinanderliegenden Lagen Berührungsflächen (92a, 92b) aufweist, und auf der Oberfläche (76) der Glasfaserleitung (52) vor dem Aufwickeln Erhebungen erzeugt (16) werden, wobei zwischen den Erhebungen (86) Zwischenräume (88) entstehen (36), **dadurch gekennzeichnet, dass** die Erhebungen (86) derart verteilt (30) werden, dass im Bereich jeweils einer der Berührungsflächen (92a, 92b) mindestens eine der Erhebungen (86) einer der benachbarten Lagen (96a bis 96c) der jeweiligen Berührungsfläche (92a, 92b) in mindestens einen der Zwischenräume (88) der anderen der benachbarten Lagen (96a bis 96c) derselben Berührungsfläche (92a, 92b) greift (42), wodurch sich die Lagen (96a bis 96c) ineinander verzahnen und die Lagen (96a bis 96c) der Glasfaserleitung (52) statisch lagefixiert werden, so dass ein sicheres und leichtes Abspulen der Glasfaserspule (72) gewährleistet wird.

2. Verfahren nach Anspruch 1, **dadurch gekennzeichnet, dass** die Erhebungen (86) mit einem Material gebildet werden, das an der Oberfläche (76) der Glasfaserleitung (52), insbesondere durch Adhäsion, angehaftet wird.

3. Verfahren nach Anspruch 1 oder 2 , **dadurch gekennzeichnet, dass** die Erhebungen erzeugt (16) werden, indem eine Dispersion (60) mit einem flüssigen Anteil (84) und einem festen Anteil (82) auf die Oberfläche (76) der Glasfaserleitung (52) aufgebracht oder verteilt (30) und der flüssige Anteil der Dispersion ausgetrocknet oder verdampft (34) wird.

4. Verfahren nach Anspruch 3, **dadurch gekennzeichnet, dass** die Dispersion (60) auf die Oberfläche (76) der Glasfaserleitung (52) aufgebracht oder verteilt (30) wird, indem die Glasfaserleitung (52) ein mit der Dispersion (60) getränktes erstes Mittel (58) streift (26) und/ oder die Glasfaserleitung (52) und die Dispersion (60) mit entgegengesetzter Polarität geladen (18), die Dispersion (60) zerstäubt (20) und die zerstäubte Dispersion (60) in den Bereich der Glasfaserleitung (52) gebracht (22) wird.

5. Verfahren nach Anspruch 3 oder 4 **dadurch gekennzeichnet, dass** der flüssige Anteil (84) der Dispersion (60) ausgetrocknet (34) wird, indem die Glasfaserleitung (52) mit aufgebrachter Dispersion (60) ein oder mehrfach durch mindestens ein Thermoelement (66) gelenkt (32) wird.

6. Verfahren nach einem der Ansprüche 3 bis 5, **dadurch gekennzeichnet, dass** die Dispersion (60) auf Wasserbasis gebildet wird.

7. Verfahren nach einem der Ansprüche 3 bis 6, **dadurch gekennzeichnet, dass** der feste Anteil (82) der Dispersion (60) auf Kunststoffbasis gebildet wird.

8. Verfahren nach einem der vorherigen Ansprüche, **dadurch gekennzeichnet, dass** die Glasfaserleitung (52) beim Wickeln (40) einer Zugkraft ausgesetzt (38) wird, die abhängig vom Material und der Verteilung der Dispersion (60) und der zu wickelnden Lage (96a bis 96c) ist.

9. Verfahren nach einem der vorherigen Ansprüche, **dadurch gekennzeichnet, dass** jede Lage (96a bis 96c) Windungen aufweist und die Glasfaserleitung (52) beim Wickeln (40) innerhalb jeder der Windung in sich selber gedreht (12) wird.

10. Glasfaserspule (72) mit einem selbsttragenden Wickel (90) einer Glasfaserleitung (52), wobei der Wickel (90) als eine Kreuzwicklung ausgebildet ist, sodass der Wickel (90) mehrere übereinanderliegende Lagen (96a bis 96c) der Glasfaserleitung (52), die Glasfaserleitung (52) eine Oberfläche (76) und die Glasfaserspule (72) jeweils zwischen benachbarten Lagen (96a bis 96c) der übereinanderliegenden Lagen (96a bis 96c) Berührungsflächen (92a, 92b) aufweist, und die Oberfläche (76) Erhebungen (86) und Zwischenräume (88) zwischen den Erhebungen (86) aufweist, welche vor einem Aufwickeln bei der Glasfaserleitung (52) erzeugt wurden, **dadurch gekennzeichnet, dass** die Erhebungen (86) derart verteilt sind, dass im Bereich jeweils einer der Berührungsflächen (92a, 92b) mindestens eine der Erhebungen (86) einer der benachbarten Lagen (96a bis 96c) der jeweiligen Berührungsfläche (92a, 92b) in mindestens einen der Zwischenräume (88) der anderen der benachbarten Lagen (96a bis 96c) derselben Berührungsfläche (92a, 92b) greift, wodurch sich die Lagen (96a bis 96c) ineinander verzahnen und die Lagen (96a bis 96c) der Glasfaserleitung (52) statisch lagefixiert werden, so dass ein sicheres und leichtes Abspulen der Glasfaserspule (72) gewährleistet wird.

11. Glasfaserspule nach Anspruch 10, **dadurch gekennzeichnet, dass** die Erhebungen (86) mit einem Material gebildet sind, das an der Oberfläche (76) der Glasfaserleitung (52), insbesondere durch Adhäsion, anhaftet.

12. Glasfaserspule nach Anspruch 10 oder 11, **dadurch gekennzeichnet, dass** das an der Oberfläche (76) der Glasfaserleitung (52) anhaftende Material, mit dem die Erhebungen gebildet sind, aus dem festen Anteil (82) einer Dispersion (60), besteht.

13. Glasfaserspule nach einem der Ansprüche 10 bis 13, **dadurch gekennzeichnet, dass** jede Lage (96a bis 96c) Windungen aufweist und die Glasfaserleitung (52) innerhalb jeder Windung in sich selbst gedreht ist.

14. Glasfaserspule nach einem der Ansprüche 10 bis 12, **dadurch gekennzeichnet, dass** der Wickel (90) in jeder Lage (96a bis 96c) eine Spannung der Windungen der Glasfaserleitung (52) aufweist, die abhängig vom Material und der Verteilung der Dispersion (60) sowie der jeweiligen Lage (96a bis 96c) ist.

## Claims

1. Method for producing an optical fibre coil (72) with a self-supporting winding (90) of an optical waveguide (52), wherein the winding (90) is wound as a cross winding (40) so that the winding (90) is formed with several superposed layers (96a to 96c) of the optical waveguide (52), and the optical waveguide comprises a surface (74) and the optical fibre coil (72) comprises contact surfaces (92a, 92b) between adjacent layers (96a to 96c) of the superposed layers, and elevations are produced (16) on the surface (76) of the optical waveguide (52) before the winding up, wherein intermediate spaces (88) are produced (36) between the elevations (86),**characterized by** that the elevations (86) are distributed (30) in such a manner that in the area of each one of the contact surfaces (92a, 92b) at least one of the elevations (86) of one of the adjacent layers (96a to 96c) of the particular contact surface (92a, 92b) engages into at least one of the intermediate spaces (88) of the other one of the adjacent layers (96a to 96c) of the same contact surface (92a, 92b), as a result of which the layers (96a to 96c) are engaged into each other and the layers (96a to 96c) of the optical waveguide (52) are statically fixed in position so that a reliable and easy winding off from the optical fibre coil (72) is ensured.

2. Method according to Claim 1, **characterized by** that the elevations (86) are formed with a material that is adhered on the surface (76) of the optical waveguide (52), especially by adhesion.

3. Method according to Claim 1 or 2, **characterized by** that the elevations are produced (16) in that a dispersion (60) with a liquid component (84) and with a solid component (82) is applied or distributed (30) on the surface (76) of the optical waveguide (52) and that the liquid component of the dispersion is dried or evaporated (34).

4. Method according to Claim 3, **characterized by** that the dispersion (60) is applied or distributed (30) on the surface (76) of the optical waveguide (52) in that the optical waveguide (52) is brushed (26) with a first agent (58) impregnated with the dispersion (60) and/or the optical waveguide (52) and the dispersion (60) are charged with opposite polarity (18), the dispersion (60) is atomized (20) and the atomized dispersion (60) is brought into the area of the optical waveguide (52).

5. Method according to Claim 3 or 4, **characterized by** that the liquid component (84) of the dispersion (60) is dried (34) in that the optical waveguide (52) with the applied dispersion (60) is conducted (32) once or several times through at least one thermal element (66).

6. Method according to one of Claims 3 to 5, **characterized by** that the dispersion (60) is formed on a water basis.

7. Method according to one of Claims 3 to 6, **characterized by** that the solid component (82) of the dispersion (60) is formed on a plastic basis.

8. Method according to one of the previous claims, **characterized by** that the optical waveguide (52) is exposed to a tractive force (38) during the winding (40) which is a function of the material and of the distribution of the dispersion (60) and of the layer (96a to 96c) to be wound.

9. Method according to one of the previous claims, **characterized by** that each layer (96a to 96c) comprises windings and that the optical waveguide (52) is rotated during winding (40) into itself (12) within each winding.

10. Optical fibre coil (72) with a self-supporting winding (90) of an optical waveguide (52), wherein the winding (90) is constructed as a cross winding so that the winding (90) comprises several superposed layers (96a to 96c) of the optical waveguide (52), the optical waveguide (52) has a surface (76) and the optical fibre coil (72) comprises contact surfaces (92a, 92b) between adjacent layers (96a to 96c) of the superposed layers (96a to 96c) and the surface (76) comprises elevations (86) and intermediate spaces (88) between the elevations (86) which are produced before a winding in the optical waveguide (52),**characterized by** that the elevations (86) are distributed in such a manner that in the area of each one of the contact surfaces (92a, 92b) at least one of the elevations (86) of one of the adjacent layers (96a to (6c) of the particular contact surface (92a, 92b) engages into at least one of the intermediate spaces (88) of the other one of the adjacent layers (96a to 96c) of the same contact surface (92a, 92b), as a result of which the layers (96a to 96c) are engaged into each other and the layers (96a to 96c) of the optical waveguide (52) are statically fixed in position so that a reliable and easy winding off from the optical fibre coil (72) is ensured.

11. Optical fibre coil according to Claim 10, **characterized by** that the elevations (86) are formed with a material that is adhered on the surface (76) of the optical waveguide (52), especially by adhesion.

12. Optical fibre coil according to Claim 10 or 11, **characterized by** that material adhering to the surface (76) of the optical waveguide (52) and with which the elevations are formed consists of the solid component (82) of a dispersion (60).

13. Optical fibre coil according to one of Claims 10 to 12, **characterized by** that each layer (96a to 96c) comprises windings and that the optical waveguide (52) is rotated into itself within each winding.

14. Optical fibre coil according to one of Claims 10 to 12, **characterized by** that the winding (90) has a tension of the windings of the optical waveguide (52) in each layer (96a to 96b) which is a function of the material and of the distribution of the dispersion (60) and of the particular layer (96a to 96c).

## Revendications

1. Procédé de fabrication d'une bobine de fibre de verre (72) dotée d'un enroulement (90) autoporteur (90) d'une conduite en fibre de verre (52), l'enroulement (90) étant enroulé sous la forme d'un enroulement croisé (40) de sorte que l'enroulement (90) est formé par plusieurs couches superposées (96a à 96c) de fibre de verre (52), la conduite en fibre de verre présentant une surface (74) et la bobine de fibre de verre (72) présentant des surfaces de contact (92a, 92b) respectivement situées entre des couches voisines (96a à 96c) parmi les couches superposées, des élévations étant produites (16) sur la surface (76) de la conduite en fibre de verre (52) avant l'opération d'enroulement, des interstices (88) étant créés (36) entre les élévations (86), **caractérisé en ce que** les élévations (86) sont réparties (30) de telle manière que, dans la zone d'une des surfaces de contact (92a, 92b) respective, au moins une des élévations (86) d'une des couches voisines (96a à 96c) de la surface de contact respective (92a, 92b) s'introduise (42) dans au moins un des interstices (88) des autres couches voisines (96a à 96c) de la même surface de contact (92a, 92b), moyennant quoi les couches (96a à 96c) s'emboîtent les unes dans les autres et les couches (96a à 96c) de la conduite en fibre de verre (52) sont fixées dans une position statique de manière à garantir un déroulement sûr et facile de la bobine de fibre de verre (72).

2. Procédé selon la revendication 1, **caractérisé en ce que** les élévations (86) sont formées par un matériau collant, notamment par adhésion, à la surface (76) de la conduite en fibre de verre (52).

3. Procédé selon la revendication 1 ou 2, **caractérisé en ce que** les élévations sont produites (16) en appliquant ou en répartissant (30) une dispersion (60) présentant une partie liquide (84) et une partie solide (82) sur la surface (76) de la conduite en fibre de verre (52) et en séchant ou en évaporant (34) la partie liquide de la dispersion.

4. Procédé selon la revendication 3, **caractérisé en ce que** la dispersion (60) est appliquée ou répartie (30) sur la surface (76) de la conduite en fibre de verre (52) par le fait que cette dernière effleure (26) un premier moyen (58) imbibé de la dispersion (60) et/ou par le fait que la conduite en fibre de verre (52) et la dispersion (60) sont chargées (18) avec une polarité inverse, que la dispersion (60) est atomisée (20) et que la dispersion (60) atomisée est placée (22) à proximité de la conduite en fibre de verre (52).

5. Procédé selon la revendication 3 ou 4, **caractérisé en ce que** la partie liquide (84) de la dispersion (60) est séchée (34) par le fait que la conduite en fibre de verre (52) présentant l'application de dispersion (60) est dirigée (32) une ou plusieurs fois dans au moins un thermocouple (66).

6. Procédé selon l'une quelconque des revendications 3 à 5, **caractérisé en ce que** la dispersion (60) est à base d'eau.

7. Procédé selon l'une quelconque des revendications 3 à 6, **caractérisé en ce que** la partie solide (82) de la dispersion (60) est formée à base de plastique.

8. Procédé selon l'une quelconque des revendications précédentes, **caractérisé en ce que** la conduite en fibre de verre (52) est exposée (38), pendant l'enroulement (40), à une force de traction qui dépend du matériau, de la répartition de la dispersion (60) et de la couche (96a à 96c) à enrouler.

9. Procédé selon l'une quelconque des revendications précédentes, **caractérisé en ce que** chaque couche (96a à 96c) présente des spires et **en ce que** la conduite en fibre de verre (52) se tourne (12) sur elle-même lors de l'enroulement (40) dans chacune des spires.

10. Bobine de fibre de verre (72) dotée d'un enroulement (90) autoporteur d'une conduite en fibre de verre (52), l'enroulement (90) étant conçu sous la forme d'un roulement croisé de sorte que l'enroulement (90) présente plusieurs couches superposées (96a à 96c) de la conduite en fibre de verre (52), que la conduite en fibre de verre (52) présente une surface (76) et que la bobine de fibre de verre (72) présente des surfaces de contact (92a, 92b) respectivement situées entre des couches voisines (96a à 96c) parmi les couches superposées (96a à 96c), la surface (76) présentant des élévations (86) et, entre ces élévations (86), des interstices (88) créés sur la conduite en fibre de verre (52) avant une opération d'enroulement, **caractérisée en ce que** les élévations (86) sont réparties de telle manière que dans la zone d'une des surfaces de contact (92a, 92b) respective, au moins une des élévations (86) d'une des couches voisines (96a à 96c) de la surface de contact respective (92a, 92b) s'introduise dans au moins un des interstices (88) des autres couches voisines (96a à 96c) de la même surface de contact (92a, 92b), moyennant quoi les couches (96a à 96c) s'emboîtent les unes dans les autres et les couches (96a à 96c) de la conduite en fibre de verre (52) sont fixées dans une position statique de manière à garantir un déroulement sûr et facile de la bobine de fibre de verre (72).

11. Bobine de fibre de verre selon la revendication 10, **caractérisée en ce que** les élévations (86) sont formées par un matériau collant, notamment par adhésion, à la surface (76) de la conduite en fibre de verre (52).

12. Bobine de fibre de verre selon la revendication 10 ou 11, **caractérisée en ce que** le matériau adhérant à la surface (76) de la conduite en fibre de verre (52) et formant les élévations se compose de la partie solide (82) d'une dispersion (60).

13. Bobine de fibre de verre selon l'une quelconque des revendications 10 à 12, **caractérisée en ce que** chaque couche (96a à 96c) présente des spires et **en ce que** la conduite en fibre de verre (52) est tournée sur elle-même dans chaque spire.

14. Bobine de fibre de verre selon l'une quelconque des revendications 10 à 12, **caractérisée en ce que** l'enroulement (90) dans chaque couche (96a à 96c) présente une tension des spires de la conduite en fibre de verre (52) dépendant du matériau et de la répartition de la dispersion (60) ainsi que de la couche (96a à 96c) respective.
